# EUROPEAN PATENT APPLICATION

(11) **EP 1 801 715 A2**
(43) Date of publication of application: **27.06.2007**
(21) Application number: 06126351.3
(22) Date of filing: 18.12.2006
(51) Int. Cl.: G06F 17/30

(54) **Method for dynamically organizing audio-visual items stored in a central database**

(30) Priority: 21.12.2005 EP 05112681
(71) Applicant: Transmedia Communications SA, 1203 Genève (CH)
(72) Inventor: Tsarkova, Natalia, 1206, Genève (CH)
(74) Representative: Leman Consulting S.A.

(57) **Abstract**

A method for remotely and dynamically managing, sequencing and retrieving audio-visual items from a central database in order to generate a customized digital audio-visual data stream. The content of this stream is associated to the selected items and can be visualized and/or stored in a storing device for a later use. This method is carried out by means of a central content database, central rights database and any number of rules databases ("Filters") which can reflect changing parameters and rules of the system, which can pertain to evolving digital rights and permissions, marketing and other system goals and rules pertaining to information exchange between users . An example of a graphic and user-friendly interface is presented on a user terminal unit which can dynamically reflect both user and system generated changes, and dynamically present customized audio-visual streams (playlists) based on user selection and personalized preferences, system objectives and eventual play-list sharing between users.

## Description

### Field of the invention

The present invention concerns the dynamic organization of audio-visual items, which are intended for unicast via a control center to a terminal. This invention presents a radically new approach to user controlled online environments, allowing environment owners to dynamically organize user-selected items through an infinite set of database rules and filters. In particular, a user-friendly interface is described with features allowing system owners to dynamically impact audio-visual sequences, selected and sequenced by system users via a remote audio-visual item database.

### Background of the invention

An example of selecting video items or sequences and placing them into a predefined order appears in video movies editing processes. The video sequences are first downloaded from the storing unit of a movie camera and than selected on the display of a personal computer thanks to their representation in a reduced form. The user selects sequences or parts of them in various lengths in a first window for transferring them into a second window where the video movie is constructed by arranging the selected sequences in a predefined order. Once the video movie is edited, it is converted into a suitable format to be stored on a disk or other storing device. Sound items, which are downloaded from the same source as the video items or from another storing unit, are handled in a similar manner and combined with the arranged video sequences. In this process the final audio-visual content is stored locally on a storing device such as a hard or an optical disc for its distribution.

The document US2005050218 describes another application where communications are automated between video asset owners and an operator who provides video delivery services. These communications coordinate the distribution of video assets in accordance with content ownership and distribution rights granted from each video asset owner to the operator. The video asset owners and the operator use the automated communication for creating video items and for selecting and distributing video assets. This automated communication system enables the video asset owners and the operator to accomplish their respective tasks by accessing a single system. The video asset owner determines assets to be made available to the operator during a particular license time period and adds those video assets to the distribution system of the operator. The latter selects one or more video assets specified by one or more video asset owners and the corresponding periods of time during which the video asset is to be offered to viewers.

In a further document US6535888, a method and system for providing a visual search directory is described. A system and method for visually and functionally extending the reach of web sites includes a plurality of interactive, animated, multimedia previews of web sites organized into a searchable database. The searchable database is stored on a central server and forms the backend of a visual search directory. Users access the database through an interface that allows them to perform a search and receive results from the search in the form of animated, multimedia previews of relevant web sites. In one embodiment, a site feature includes an interactive, visual shopping cart module that allows consumers to drag-and-drop products and components into the shopping cart, and then to purchase those products and components directly through the site feature. As a result, that data is continually associated to the icon, regardless of its location on the Web. Therefore, when an icon is dragged into the shopping cart window, the price of the product is automatically updated in real-time using the relevant data associated with the graphic, and can be immediately displayed through a window to the user.

The document US2004139465 describes an electronic program guide (EPG) with hyperlinks to target resources. An interactive entertainment system has a program provider, which distributes video content programs to multiple subscribers over a distribution network. Each subscriber has a user interface unit receiving the digital video program and converting it for display on a television monitor, or other display unit. The user interface unit has a processor and memory. An electronic programming guide (EPG) resides in the memory of user interface unit and is executable on the processor to organize programming information that is descriptive of the programs supplied over the interactive entertainment system. The EPG supports a user interface, which visually correlates programs titles to scheduled viewing times. A hyperlink browser also resides in memory and is executable on the processor. One or more hyperlinks, which reference target resources containing interactive content related to the video programs, are integrated as part of the EPG interface. The hyperlinks can be placed in the program titles, channel numbers, or description area, and can be situated alone or embedded within other text. When the user activates a hyperlink within the EPG, the user interface unit launches the browser to activate the target resource specified by the hyperlink. The data retrieved from the target resource is then displayed on the display unit. The user can also drag a particular program or channel label from its location within the EPG interface and drop the label at another location on the display unit. This drag-and-drop operation associates an instruction with the label that will execute in response to activation of the label. The instruction might cause the visual display unit to tune to the program or channel represented by the particular label, or to initiate procedures to record the program when it begins playing, or to jump to a related target resource, such as a website.

The document US2003037035 deals with a method and system for providing a data marking device and data searching system including a user terminal connected to a server terminal over an Internet connection for transmitting find music search request. The server terminal in response accesses one or more storage units and retrieves corresponding information such as other marked data for transmission to the user terminal. The user may perform a drag and drop operation (using a computer mouse, for example) to drag one of the bookmarked music clips displayed on display unit and to drop it in find music icon. It should be noted that the user has received the list of bookmarked music clips from server terminal, and each of the received bookmarked music clip and the corresponding information is displayed on user terminal output unit as a separate icon or any other equivalent displaying means. When the bookmarked music clip is dropped into find music icon, server terminal is configured to transmit search status display to output unit of user terminal for display thereon. Additionally, in one embodiment, users may establish the desired level of third party access to their corresponding user terminals such as, limited access, unlimited access, and no access type levels to allow restricted searches, unrestricted searches, and no searches, respectively, by other user terminals executing the find music operation.

The document US2002/184515 describes in a first aspect, a unit for managing rights information representing a right for a plurality of devices to use content data.

The unit comprises:
- a right database including the rights information each assigned to the devices,
- a right management section for generating in response to a request from anyone of the devices permission information which represents a permission for the device to access the content data by using the right information corresponding to the device in the rights database,
- a license information generation section for generating license information which at least includes the permission information,
- a communication section for transmitting the license information to the device, which has requested the access to the content.

In this aspect, a plurality of devices can share the same rights information.

In a second aspect, the document describes a device receiving license information from a rights management unit connected thereto over a transmission path.

The device comprises:
- an interface connected to a portable recording medium for data communications, which stores a unique media identifier
- an identifier extraction for extracting the media identifier from the portable recording medium connected to the interface;
- a request generation section for generating by using the media identifier a request needed to receive a permission to use content data;
- a communications section for transmitting the request to the rights management unit over the transmission path.

Here, the rights management unit manages rights information of the content data provided to the portable recording medium, and in response to the request provided from the device, generates and transmits the license information to control the use of the content data in the device equipped with the recording medium.

In this second aspect, the user of the portable recording medium can use the content data, with his rights information, on the device belonging to another user.

A first aim of the document is to provide a rights management technology with which a plurality of consumer-electronics products can share the same digital rights. A second aim is to provide a rights management technology suiting to various consumer-electronics products.

The document US2003/221541 relates generally to systems and methodologies that facilitate generation of playlists. The invention can also facilitate organization and access to media items by identifying items similar to desirable characteristics and dissimilar to undesirable characteristics by analyzing user selectable seed items.

The method facilitates playlist generation for a library or collection of media items by permitting a user to select a plurality of seed items. Some of the seed items are selected as desirable indicating that the user prefers; additional media items similar to the desirable seed items and others are selected as undesirable indicating that the user prefers additional media items dissimilar to the undesirable seed items. Additionally, the user can weight the seed items to establish a relative importance thereof. The invention compares media items in the collection with the seed items and determines which media items to be added to the playlist. The playlist can be regenerated by the user adding desirable seed items to the playlist and removing media items from the playlist (e.g., undesirable seed items).

The aim of the method is to reduce effort and time required by a user to generate a playlist that meets or is similar to desired characteristics or features by automatically generating a playlist based on seed items. Consequently, the user is not required to manually search through a collection of media items and select those items that meet the user's current mood or desire in order to generate a playlist.

The systems and methods described above have several drawbacks such as dependency on the user unit configuration and performances, needs of high capacity local storage means, static nature of the user selected playlist which cannot reflect changing parameters related to digital rights and permissions, evolving system goals, as well as evolving needs for user selection personalization, customization and eventual exchange and sharing with other system users who do not have the same rights or permissions.

### Summary of the invention

The present invention aims to overcome the drawbacks of the prior art systems and their functioning by providing a method for remotely and dynamically managing, sequencing and retrieving audio-visual items from a central database in order to generate a customized digital audio-visual data stream. The content of this stream is associated to the selected items and can be visualized and/or stored in a storing device for a later use. This method is carried out by means of a central content database, central rights database and any number of rules databases ("Filters") which can reflect changing parameters and rules of the system, which can pertain to evolving digital rights and permissions, marketing and other system goals and rules pertaining to information exchange between users. An example of a graphic and user-friendly interface is presented on a user terminal unit which can dynamically reflect both user and system generated changes, and dynamically present customized audio-visual streams (playlists) based on user selection and personalized preferences, system objectives and eventual play-list sharing between users.

This aim is reached with a method for remotely organizing audio-visual items stored in a central database managed by a control center including a plurality of databases connected to the central database, each item having at least an identifier, a rights descriptor and at least one visual extract associated with the content of the item, said method comprising the steps of:
- obtaining, by means of a user interface on a user's terminal, a plurality of items arranged in a playlist,
- accessing a user's rights database containing user's profile and rights, verifying the items of the playlist by comparing the rights descriptors with the user's rights from said database,
- accessing at least one additional database for filtering and managing information related to the content associated to the items of the playlist, said information being provided by third parties conditioning the user's rights in the user's rights database,
- receiving the content associated to the items of the playlist in form of a data stream on a request transmitted to the control center,
- updating the user's rights in the user's rights database in respect of the particulars of the received items of the playlist.

According to a practical implementation of the invention, the user's terminal, connected to a control center via a communication network, shows preferably two areas on a display. A first area is allotted to the central database containing audio-visual items available to an authorized user. An item is represented for example with a significant picture extracted from the content associated to this item accompanied with a suitable descriptor or identifier. The second area is attached to a secondary database wherein items selected from the central database are moved in order to build a sequence also called playlist in a predefined order. In other words the display order of the items in the first area is generally different from the order of the selected items displayed in the second area. In both areas, the items can be displayed with the same attributes such as a picture, movie and an identifier.

A playlist is an information object wherein several data extracted from the database are stored comprising all necessary links for retrieving or playing the content relative to the items of the list.

Moving an item from the first to the second area leads to an access to the secondary database containing user-selected items to update this database with the moved item. A connection is established with a user's rights database to compare the item's right descriptor with the user's rights. The results of the comparison can be 100% positive, partially positive, or 100% negative. These results are further passed on to the next database, which contains a set of rules to be applied to the selection and to further "filter" databases according to their priority ranking. The resulting selection is then delivered from the central database in form of a visual representation of a sequence of units from the central content database and associated digital audio-visual data stream ready to be visualized on the display. The streaming position of the displayed content corresponds to the one defined previously in the second display area during the selection of the items. In an embodiment the data stream can be stored on a storing unit connected to the user's terminal.

This method represents following advantages:
1. The data management is carried on line without needing any security module attached to the user's terminal. A security module is a device known as inviolable, such a smart card for example, containing encryption/decryption keys and user data defining rights for processing data. In the method according to the invention, the user rights are managed through the remote user's rights database, which is integrated in the control center as well as the central and the secondary database. In an embodiment the user's terminal can be a personal computer, which can be changed easily without modifying any user specific configuration like replacing a smart card, a dongle or other security device.
2. This dynamic system solves a major issue associated with streaming online data: rights, permissions and rules associated with audio-visual content evolve and change constantly. In order to comply with these changes, existing audio-visual interactive distribution systems have to limit consumer streaming experience to the currently available selection of contents. No play-lists or personalized sequences can be created, unless the content is purchased "to own" and physically downloaded to consumer's computer - a cumbersome limitation from both consumer and audio-visual industry point of view. The method of the invention makes it possible to reflect the above changes dynamically in a streaming environment while allowing users the maximum degree of independence in selecting, sequencing, viewing, storing references for further views and sharing audio-visual items.

### Brief Description of the drawings

The invention will be better understood thanks to the following detailed description referring to the enclosed figures given as non-limitative examples.

Figure 1 represents a block diagram of a system able to carry out the method for remotely selecting, with a user terminal, audio-visual items from a control center comprising management databases.

Figure 2 shows an example of user interface for personal computer using a dynamic playlist engine and available items from the fist database.

Figure 3 shows the user interface of figure 2 switched to a monitor for displaying contents of playlists or information messages related to playlist items.

Figure 4 shows an example of a simplified user interface for Personal Digital Assistant (PDA) with dynamic playlist engine.

### Detailed description of the invention

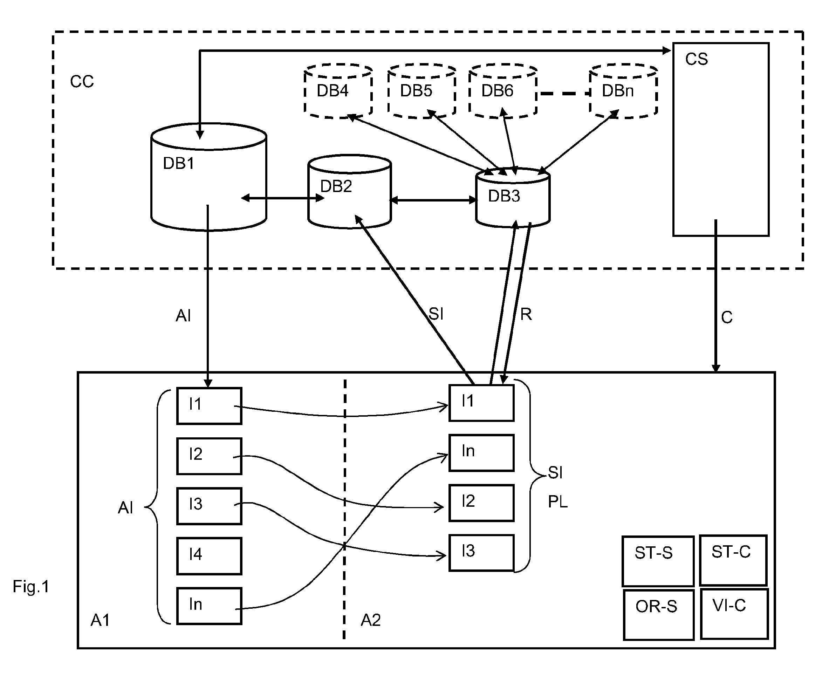

Figure 1 illustrates a system comprising a user's terminal represented with a schematized graphical user interface (GUI) connected to a control center (CC) via a communication network. The control center (CC) includes three databases (DB1, DB2, DB3) and an audio-visual content server (CS). These elements can also be decentralized in several locations as long as they are connected together through the network.

The central or first database (DB1) lists audio-visual items (I1, I2,...In) available in the content server (CS) and is accessible to the user's terminal. The items (I1, I2,...In) are preferably displayed on the graphical user interface (GUI) in form of a content representative picture, a short movie or an icon accompanied with a description. The latter comprises several elements such as an identifier, a title, a category index, right descriptors, the duration of the piece of video or music corresponding to the item, etc. The user interface (GUI) can include optional filters for displaying only the most useful elements of the items descriptions preventing a confusing presentation of the first database (DB1) content. In an embodiment the user interface (GUI) includes tabs for filtering the items according user defined criteria such as category, type, duration etc.

The graphical user interface (GUI) comprises preferably at least two areas (A1, A2) or windows for displaying respectively available items (Al) contained in the first database (DB1 ) and items (SI) that the user selects for building a specific playlist (PL). These selected items (SI) are recorded in the second database (DB2), in a user determined sequential order, on the second area (A2) of the graphical interface (GUI). According to an embodiment of the user interface (GUI), items are selected in the first area (A1 ) attached to the first database (DB1 ) and dropped in a predetermined position in the second area (A2) attached to the second database (DB2). This technique is called drag and drop in known user interfaces. Alternatively, the items can also be copied from the first area (A1) and pasted in the second area (A2) on their respective position.

According to an embodiment of the user interface (GUI), the available items (Al) of the first area (A1) and/or the ones of the playlist (PL) are displayed with a colored frame or in association with a colored bar, icon or other graphical symbol. Each color represents a status of the item (l1, l2,...ln) relative to information extracted from the database (DB1, DB2). For example, items marked with a red bar cannot be obtained without special rights, the ones with a yellow bar can be obtained in condition that an other item is selected (bundle selection), the ones with a green bar can be obtained with the current user data without restriction.

Each item (SI) moved into the second area (A2) is verified through an access to a third database (DB3), which contains user data. In fact, the user acquires the necessary rights for accessing the audio-visual items in the first database (DB1 ). For example, a subscription on certain types of content accessible during a predetermined time period or a certain number of times can be concluded with the operator of the control center (CC). These subscription data included in a certificate associated with user's particulars are recorded in the third database (DB3). The right descriptors (R) of the selected items are then compared with the user's rights registered in the certificate. The results of this comparison are then sent to "filter" databases DB4 through DBn, each of them representing a set of stand-alone rules of how to treat the selection playlist (PL) and its items (SI) in the context of permissions and personal user data recorded in DB3. The resulting information is recorded in DB3 and the modified selection playlist (PL) becomes available on user's computer.

Every time a user activates his personalized system environment, and/or requests a playback of a previously created playlist (PL), a verification process is launched by DB3 to make sure that final user playlist reflects the current status of his permissions, content rights and rules. A user can chose to share his playlist with another user of the same audio-visual system. When the receiving party activates the playlist, a similar verification process takes place through his personal settings database, DB3, and the attached rules database filters, DB4 to DBn.

Once the playlist verification is complete, the content server (CS) then arranges the content corresponding to each item to form a digital audio-visual data stream according to the items selection information provided by the second database (DB2). The latter is linked to the first database (DB1) connected to the content server (CS), which generates the data stream in a suitable format such as MPEG2, MPEG4 etc. and sends it towards the user's terminal. The stream can be visualized on-line during the downloading by means of any known digital audio-visual player module, for example, by clicking a "view-content" button (VI-C) on the user interface. It can also be stored on a data carrier such as a hard disc, an optical disc CD or DVD, or a static non-volatile Flash type memory, for a later viewing for example by clicking a "store-content" button (ST-C).

According to a preferred embodiment, the stream is sent in an encrypted form in order to prevent abusive distributions and copies via the network towards any non-authorized user. For decrypting the stream, the control center (CC) provides a key with the certificate containing the user's rights. This key is then stored in the third database (DB3) and/or in the user's terminal. To ensure a secured transmission, the certificate containing the decryption key is preferably encrypted with a transmission key at user's disposal. A multimedia reader module such as Windows Media Player that already verifies the user's right achieves the security.

Other parameters can also be included in the certificate such as an expiry date or a number of times for authorizing the decryption with the provided key. In this way the encrypted stream can be decrypted and read only during a limited time and/or only according to a predetermined number of repetitions. The user's terminal configuration can also be set up to prevent the storing of decrypted content from a playlist (PL) and authorizing only the storage of encrypted content which then need the decryption key with its using limits for viewing. When the key becomes invalid for a given playlist content because of, for example, expiration or exceeded number of repeated reading; a new certificate has to be requested at the control center (CC).

The third database (DB3) can be extended for further containing statistics and history recording the usage of audio-visual items. As this database is linked to the other ones (DB4, DB5, DB6...DBn), the selected items during a certain period, can be, for example, counted and classified according categories. These data can be taken in account for introducing special buying conditions on a predefined category of audio-video items. For example, if a same category of an item is selected ten times in a week in different playlists, a discount can be offered when ordering the content corresponding to a built sequence. Another possibility is to cumulate the number of selected items in order to obtain for example a free content download relatively to one or several playlists composed afterwards. The third database (DB3) manages thus a user account, which is constantly updated with the usage of the system. Monetary value amounts can also be loaded in this database for prepaying contents, services, access rights or certificates with updated keys. This extension of the third database (DB3) can consist of addition of a supplementary database (DB4, DB5, DB6,...DBn) corresponding to each category of data. A database for history, statistics, user accounting, etc can thus be connected to the other databases of the control center (CC) as represented by dotted lines in figure 1.

In other words, the third database (DB3) and its extensions, playing a role similar to a smart card, is remotely network connected to the user's terminal instead of being connected locally. This feature allows users to move from one terminal to another, without inserting any smart card in a reader, for building audio-visual items playlists as long as access to the user interface (GUI) from different terminals is authorized.

According to a further embodiment of the user interface (GUI), the destination terminal of the content stream can be defined during the order input when the sequence is terminated. This feature allows playing the stream on another terminal equipped with an appropriate reading or playing module without necessarily having the complete sequence-building user interface. It has to be noted that, the certificate has to be loaded into this terminal during an identification session with the control center (CC) respectively with the third database (DB3) in order to get at least the key for decrypting the stream. For example, the destination terminal can be a mobile equipment like a mobile phone, a portable computer or a PDA (Personal Digital Assistant), able to be connected on a fast mobile network like UMTS (Universal Mobile Telecommunications System), WIFI (Wireless Fidelity), WIMAX (Worldwide Interoperability for Microwave Access), etc. Game consoles having Internet connection features like PSP Sony Playstation can also be used as terminal as well for building a playlist as for playing content from a user database downloaded playlist.

The different terminals used for playing the stream content of a given user, can be registered in the third database (DB3) with the other user particulars in order to simplify the access procedure. The control center takes into account the terminal currently selected for the download for modifying the stream format and eventually the billing. As an example, a reduced price will be charged if the content is streamed onto a PDA with a low resolution.

Additional databases (DB4, DB5, DB6... Den) are included into the system for filtering and managing information related to the item's content, which can be sorted according to various criteria. A stand-alone "filter" database for each criterion can thus be created as for example special events (holidays, commemorations, anniversaries...), geographical location, commercial parameters as sponsored items, promotions for marketing purposes, etc. The navigation on the user interface, among the available items will then be guided for facilitating or preventing the access to the items related to these additional databases depending on current circumstances. Filtering for blocking access (blackouts) to concerts, movies or sport events that are taking place in a public location (theater, stadium, cinema, etc.) near a given geographical region can be carried out to encourage people for enjoying events in live. Items to be absolutely selected for building a playlist can be highlighted with colored framing or any other special marking.

To avoid contradictory situations with items that are for example free of charge because of a holiday and in the same time chargeable in other periods and sponsored in certain cities, a particular database establishes priorities associated to these events information. In this way, the user account will not be unduly debited thanks to the handling process carried out by multiple databases.

Another way to underline items is to propose a complete playlist, which the user can modify or not. The user interface will then become dynamic since its displayed objects change at each starting up or refreshing in accordance with events happening in a given environment and time. Such a playlist can be enriched with information related to the conditions for getting the items content as for example free of charges, included in the user subscription, prepaid, fees paid by a sponsor, rights to acquire etc. These data can be displayed with an intuitive color code as described above in an embodiment of the user interface.

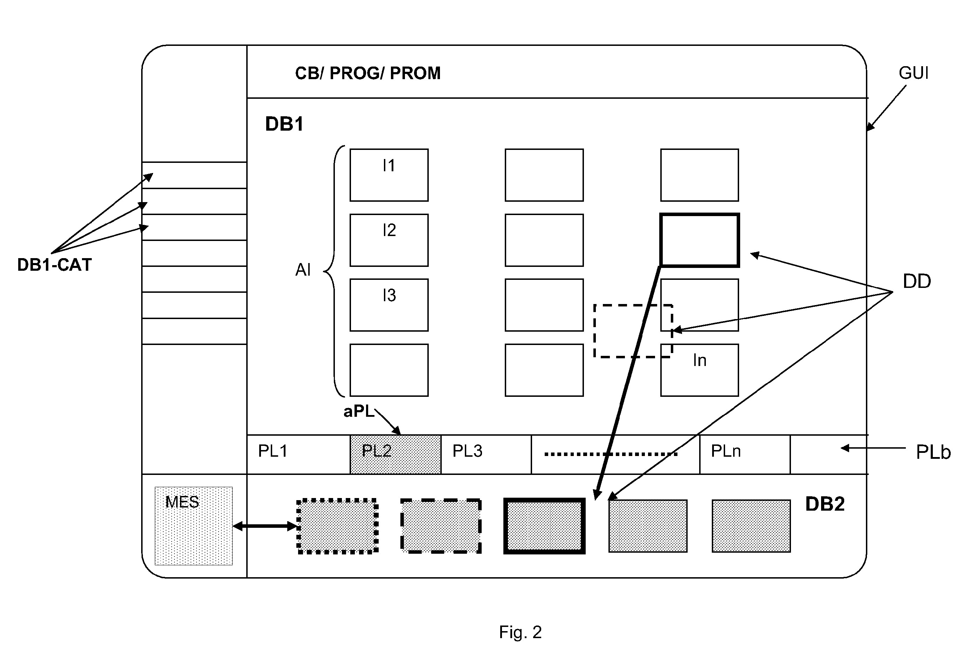

Figure 2 shows a generic graphical user interface (GUI) for personal computer using a dynamic playlist engine allowing as well navigating among several playlists, as displaying, editing and playing a playlist. The central part of the display constituting a visual interface is occupied by items or clips (l1, l2, l3,..., In) available from the first database (DB1) and by a title bar (CB/PROG/PROM) displaying content brands (CB), programming (PROG), promotions (PROM) and further advertisements. The clips are preferably sorted according to a category (jazz, pop, rock, opera, etc) chosen with corresponding buttons (CAT-DB1) on the left side of the display . A drag and drop function (DD) allows to select and manage items within the visual interface for building a playlist at the bottom of the display. This operation updates the second database (DB2), which holds all playlists (PL1, PL2, PL3,...PLn) displayed in navigation bar (PLb). Each playlist (PL1, PL2, PL3,...PLn) from the bar can be activated (active playlist aPL) as shown in gray on the figure for editing with clips taken from the first database (DB1). Selected clips from a playlist can also be arranged in a different order or they can be suppressed and replaced by other ones. A clip is generally represented by a steady or animated picture extracted from the clip surrounded for example with a color-coded frame or other specific pattern for supplementary information. The latter comprise variable permissions, rights status, promotions relative to the selected clip. Messages (MES) linked to sponsored offers within a playlist or other special indications can be displayed at the left bottom corner under the category (DB1-CAT) buttons.

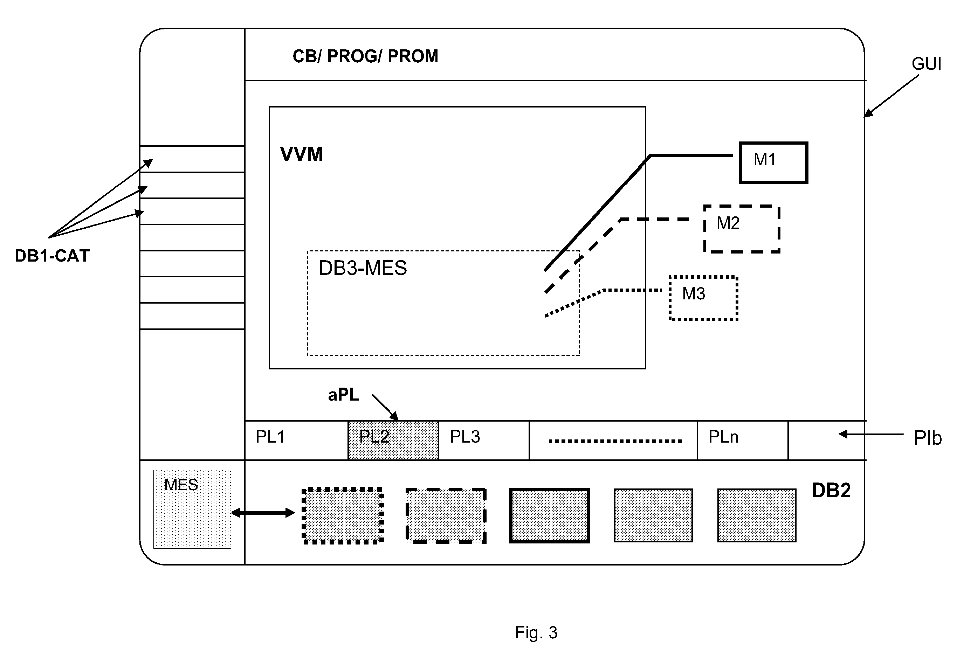

Figure 3 represents the same generic graphical user interface (GUI) switched on a mode for on-line viewing, with a video viewing monitor (VVM), a selected playlist, which content is downloaded from the content server (CS), see figure 1. Another display mode allows reading explanations related to the way for obtaining the content according to the color-coded frame around the clips (help function). For example, a message (M1) indicates that a subscription to a jazz channel allows getting the plain black-framed clips for free. A message (M2) informs that Sony offers the dotted line framed clips and a message (M3) says that the subscription to the dotted framed rock category clips is expired. These messages are generated and sent by the third database (DB3) which role is to manage the rights for obtaining the content related to a selected playlist.

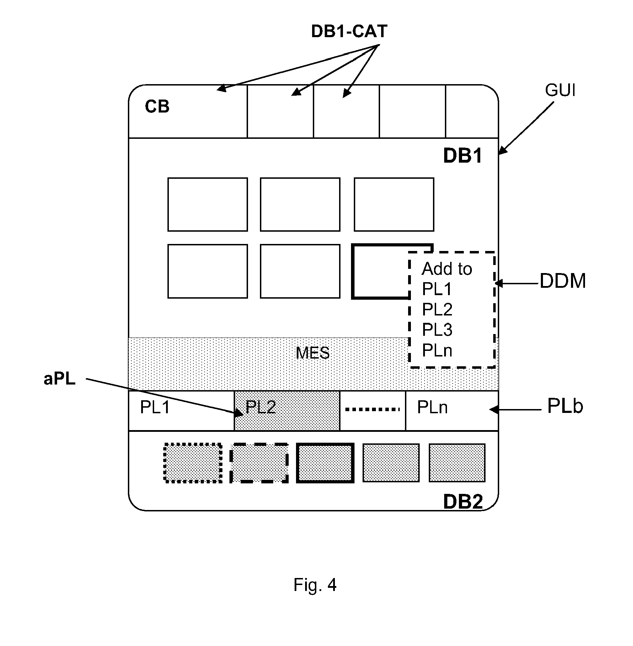

Figure 4 shows an example of a simplified graphical user interface (GUI) designed for Personal Digital Assistant (PDA) having mainly the same functions as the one for personal computer. The drag and drop function for adding clips to a playlist is replaced by a drop down menu (DDm) and the message area (MES) is positioned for an optimal reading of information messages related to the clips.

It has to be noted that the user interfaces of figures 2 to 4 are only explanatory examples, their graphical arrangement including the functionalities can be adapted in many other ways according to the terminal and network communications capabilities.

In a further aspect of the invention, multiple third parties (site owner, right owner, marketer, other consumers etc.) can dynamically manage the playlist (PL) by acting on the parameters stored in the remote databases (DB4, DB5, DB6,...DBn). These actions condition the rights validity time restriction or extensions or the number of access to an item as well as granting specials offers in function of events related to the particulars of the items of the playlist.

Such a playlist is called a dynamic playlist because its items or the availability of the content associated to the items vary constantly in function of the time, the current events or wishes of third parties. It reflects real-time changes in playlist "owners" rights and permissions and it can be co-owned by the owner of rights or of the online environment where such rights reside. For example, if the content is offered for free, the playlist can be co-owned by marketers, advertisers and sponsors who provide a commercial backing for program distribution.

The user still makes free choices while creating a playlist with available items, but the parameters stored in the rights database DB3 or in the additional ones (DB4, DB5, DB6...DBn) belonging to third parties are for the most part out of the user's control.

This dynamic property of the playlist is opposed to the one of static playlists, described in the prior art documents, obtained by downloading items into a local user terminal. The user is thus able to control the items of these local playlists without being influenced by external parameters.

A further advantage of dynamic playlist is that users can share their play-lists which is impossible with static playlists which are usually assigned to one machine, or IP address. Sharing and exchanging information is vital for viral marketing and for the success of any online experience. Today, unfortunately, due to a static nature of personal entertainment libraries, such exchange is usually done in an illegal manner, through physical copying or download of files without rights management or DRM (Digital Rights Management). The method using dynamic playlist according to the invention allows such an exchange within a legally controlled environment, because the site owner can verify and manage the shared playlist through DRM (database DB3) and other "filters" with parameters recorded in the remote databases (DB4, DB5, DB6...DBn).

### Sharing playlists.

Three exemplary scenarios for sharing a playlist between two users can be considered, namely:
a) A first user sends its playlist to a second user who belongs to the same community and has the same rights privileges by paying the same subscription. In this case, he will get the playlist and can save it as his own playlist and can modify it as he pleases for as long as he pays for a subscription.
b) The second user belongs to the same community than the first one, but does not have the same access rights. In this case he cannot view certain items which are then marked by a specific code for example with a red bar in the user interface illustrated in figures 2 to 4. He can then purchase the concerned items and thus acquire the suitable rights for viewing the related content.
   Furthermore an automated advertising filter attached to one of the extension databases (DB4, DB5, DB6...DBn) can interfere at this point because the second user represents a certain demographic target having possibilities to access items thanks to special rights offered by the advertiser.
c) The second user does not belong to the community or an entertainment portal which offers the items in the playlist. In this case two situations can be imagined, namely:
   - If the second user gets such a playlist for the first time an automated marketing filter also attached to one of the extension databases (DB4, DB5, DB6...DBn) can offer the items of the playlist for free and recommend subscription to the site of the content provider.
   - If the second user has already received many playlists and he has not yet subscribed, the system can requests that he purchases the playlist at a reduced price with an offer for joining the entertainment portal in question or for getting a suitable subscription.

### Personalized marketing using playlists

Following examples show facilities for marketer to offer content in function of selected items in a playlist or in several playlists.
1). A user has consistently created playlists on a fashion site with Italian fashion content. Next time, Milan fashion week comes around, an advertiser sends to the user an automated playlist made of the highlights of Milan shows, and created with the same type of keywords/attributes as the items the user has chosen in its personal playlists.
2) A user runs a search engine for exploring entertainment portals to create automatically playlists based on certain criteria. The items can be selected among those related to the free content or content for which the user has the access rights. The user can also introduce into the search engine the selection criteria for allowing using his personal profile to engage advertising filters which would dynamically sponsor content of items he has not purchased.

### Changing rights and marketing constraints

In the examples below a user has created a playlist which contains an item consisting of a Madonna clip.
1). The user rights for the clip have expired: instead of viewing the clip, the user sees a promotional video offering him to subscribe to a site dedicated to Madonna and get the clip back without having to pay extra charges.
2). Madonna demands that the name of the clip's composer is added at the end as a credit. A specific program automatically inserts the credit text into the dynamic playlist of the user.
3). The clip was offered to the user as a promotion for Madonna's CD two years ago. She now has a new single coming out and advertisement of the single replaces the promotional clip in the playlist.

## Claims

1. Method for dynamically organizing audio-visual items (I1, I2, ...In) stored in a central database (DB1) managed by a control center (CC) including a plurality of databases (DB2, DB3, ...DBn) connected to the central database (DB1), each item (I1, I2, ...In) having at least an identifier, a rights descriptor and at least one visual extract associated with the content (C) of the item, said method is **characterized in that** it comprises the steps of:
- obtaining, by means of a user interface (GUI) on a user's terminal, a plurality of items (SI) arranged in a playlist (PL),
- accessing a user's rights database (DB3) containing user's profile and rights, verifying the items (SI) of the playlist (PL) by comparing the rights descriptors with the user's rights from said database (DB3),
- accessing at least one additional database (DB4,...,DBn) for filtering and managing information related to the content (C) associated to the items (SI) of the playlist (PL), said information being provided by third parties conditioning the user's rights in the user's rights database (DB3),
- receiving the content (C) associated to the items (SI) of the playlist (PL) in form of a data stream on a request transmitted to the control center (CC),
- updating the user's rights in the user's rights database (DB3) in respect of the particulars of the received items of the playlist (PL).

2. Method according to claim 1, **characterized in that** the items (SI) are obtained by retrieving from the central database (DB1) a plurality of items (I1, I2, ...In) and storing said items into a secondary database (DB2) according to a predetermined order for creating a playlist (PL).

3. Method according to claim 1, **characterized in that** the items (SI) are obtained through a playlist (PL) received from an external source, said playlist (PL) being stored into a secondary database (DB2) and the access rights of the items of said playlist (PL) being verified by submitting to the user's rights database (DB3) and to the at least one additional database (DB4,...,DBn).

4. Method according to claim 1, **characterized in that** the items (SI) of a playlist (PL) are obtained by means of a search engine exploring on line portals according to user defined criteria, said playlist (PL) being stored into a secondary database (DB2) and the access rights of the items of said playlist (PL) being verified by submitting to the user's rights database (DB3) and to the at least one additional database (DB4,...,DBn).

5. Method according to claim 4, **characterized in that** the search engine replaces at least one item (I1, I2, ...In) in a playlist (PL) with an item which rights are extended by third parties when the verification of the rights of said item gives negative results.

6. Method according to anyone of the claims 1 to 4, **characterized in that** the rights of the selected items (SI) of the playlist (PL) are verified individually on each item after storing into the secondary database..

7. Method according to anyone of the claims 1 to 4, **characterized in that** the rights of the selected items (SI) of the playlist (PL) are verified after storing of the complete playlist (PL) into the secondary database (DB2).

8. Method according to claim 1, **characterized in that** an item (I1, I2, ...In) is either rejected or marked as needing rights updates in case of a negative result of the comparison between the rights descriptor of the item (l1, l2, ...In) and the respective user's rights recorded in the user's rights database (DB3).

9. Method according to claim 1 and 8, **characterized in that** the user interface (GUI) comprises means for acquiring or updating rights associated to the selected items (SI) of the playlist (DB), said rights being included in a certificate delivered by the control center (CC).

10. Method according to claim 1, **characterized in that** the data stream including the content (C) is sent in an encrypted form to the user's terminal, and a decryption key is provided by the control center (CC) with a certificate containing the user's rights and stored in the user's rights database (DB3) and/or in the user's terminal.

11. Method according to claim 10, **characterized in that** the certificate includes parameters restricting the authorization for decrypting the data stream with the provided key.

12. Method according to claim 1, **characterized in that** the user's rights database (DB3) manages a user account comprising history and statistics established in respect of particulars of the selected items (SI).

13. Method according to claim 1, **characterized in that** the request to the control center (CC) for obtaining the content (C) associated to the playlist (PL) is completed with the definition of the destination terminal allowing playing said content (C), said definition being registered in the user's rights database (DB3).

14. Method according to claim 1, **characterized in that** the additional database (DB4,...,DBn) contain information comprising parameters allowing third parties acting on the rights validity time restriction or extensions or on the number of access to an item as well as granting specials offers in function of events related to the particulars of the items (SI) of the playlist (PL).
